# FASCICULE DE BREVET EUROPEEN

(11) **EP 3 311 050 B1**
(45) Date de publication et mention de la délivrance du brevet: **18.12.2019**
(21) Numéro de dépôt: 16731077.0
(22) Date de dépôt: 13.06.2016
(51) Int. Cl.: F16K 31/60, E03C 1/04, F16K 35/04, F16K 21/06

(54) **ROBINETÀ DOUBLE TEMPORISATION**
ARMATUR MIT ZWEI ZEITÜBERSCHREITUNGSEINSTELLUNGEN
FAUCET WITH TWO TIMEOUT SETTINGS

(30) Priorité: 17.06.2015 FR 1501264
(43) Date de publication de la demande: 25.04.2018
(73) Titulaire: Les Robinets Presto, 92120 Montrouge (FR)
(72) Inventeur: BIJU-DUVAL, Rémi, 17110 Saint Georges de Didonne (FR)
(74) Mandataire: Eidelsberg, Olivier Nathan
(86) Numéro de dépôt international: PCT/EP2016/063528
(87) Numéro de publication internationale: WO 2016/202751

(56) Documents cités:
- DE-A1- 19 923 988
- FR-A1- 3 012 482
- US-A- 2 738 946
- US-A- 4 134 570
- US-A- 5 295 654

## Description

La présente invention se rapporte à un robinet dit temporisé pour un lavabo ou pour une douche, en particulier pour des lieux publics ou collectivités, à grande fréquence d'utilisation.

Classiquement, un robinet temporisé pour lavabo est constitué d'un corps de robinet, notamment de forme cylindrique circulaire, comportant un orifice d'arrivée d'eau en partie basse et un orifice de sortie d'eau en partie haute, des moyens formant circuit d'eau entre les orifices d'arrivée et de sortie, et une vanne temporisée disposée dans le circuit d'eau et commandée par des moyens de commande d'ouverture, notamment manuels, la vanne temporisée comportant une chambre de temporisation et l'agencement étant tel que l'actionnement manuel des moyens de commande de l'ouverture de l'eau entraîne la fourniture d'eau pendant un intervalle de temps fini déterminé à l'avance.

On connaît déjà dans les dispositifs formant robinet temporisé de l'art antérieur le fait de prévoir des moyens permettant à l'installateur de régler dans une plage donnée l'intervalle de temps de la temporisation lors du fonctionnement. Cependant, cet intervalle de temporisation, une fois réglé, n'est jamais parfaitement adaptée aux besoins variables des nombreux utilisateurs d'un robinet de ce genre. Il est fréquent que de l'eau soit délivrée plus longtemps que nécessaire, entraînant une consommation d'eau excessive que l'on souhaiterait pouvoir limiter.

On connaît aussi de US-A-5295654 un robinet offrant à l'utilisateur le choix entre deux temporisations, de durée respectivement longue et courte. Cependant, le système est de structure complexe et n'est pas pratique à utiliser, notamment il est difficile pour l'utilisateur de bien faire la distinction entre les deux modes, et il est n'est pas rare que l'utilisateur pense avoir mis en œuvre l'une des deux temporisations alors qu'en fait il a mis en œuvre l'autre.

De FR 3 012 482 et de US 2 738 946, on connaît des systèmes de chasse d'eau à double flux. Un obturateur principal est reçu dans un siège principal disposé dans le circuit d'eau principal. Une vanne temporisée comportant une chambre de temporisation et un obturateur auxiliaire commande le déplacement de l'obturateur principal. Ce système est complexe de structure, nécessitant deux circuits d'eau séparés l'un de l'autre, respectivement un principal pour le passage de l'eau de l'arrivée d'eau vers la sortie d'eau et un secondaire pour la temporisation.

La présente invention vise à surmonter les inconvénients de l'art antérieur en proposant un dispositif formant robinet temporisé pour lavabo ou douche, en particulier pour collectivité, qui soit de structure simple et particulièrement économe en terme de consommation d'eau.

Suivant l'invention, un assemblage comportant un dispositif formant robinet temporisé et une zone de réception et d'évacuation de l'eau, par exemple un bassin, une vasque, une cuvette ou analogue, suivant la revendication 1, des perfectionnements et modes de réalisation avantageux étant définis aux sous revendications.

En prévoyant ainsi d'offrir à l'utilisateur le choix entre deux temporisations, une longue et une courte, et ce dès la fin de l'une ou l'autre et indépendamment l'une de l'autre, par exemple en prévoyant un bouton poussoir ou une manette à deux positions, deux boutons poussoirs ou deux manettes ou analogues, qui entraînent la délivrance l'un à la suite de l'autre de deux volumes d'eau différents, ce dernier, en fonction de ses besoins, peut choisir toute séquence de délivrance d'un ou de plusieurs grands volumes d'eau et/ou d'un ou de plusieurs petits volumes d'eau. Par exemple, et suivant un mode de réalisation avantageux, lorsqu'il se lave les mains, il peut choisir d'actionner les moyens de commande pour obtenir d'abord le petit volume d'eau pour se mouiller les mains, puis, après se les être frottées avec du savon, d'actionner les moyens de commande pour obtenir le grand volume d'eau pour le rinçage.

On obtient ainsi un robinet de structure simple qui est particulièrement économique, l'utilisateur pouvant adapter la quantité d'eau à ses besoins et en particulier peut sélectionner facilement, sans risquer de se tromper, un mode ou l'autre. En outre, l'utilisateur peut passer d'un mode à l'autre directement l'un à la suite de l'autre sans avoir à modifier les réglages de temporisation du robinet.

Suivant un mode de réalisation préférentiel de l'invention, les moyens de commande sont constitués d'une manette montée rotative par rapport à un axe, l'agencement étant tel que la rotation de la manette dans un sens entraînant une première temporisation avec un premier intervalle de temps de temporisation et la rotation dans le sens inverse entraînant une deuxième temporisation avec un deuxième intervalle de temps de temporisation, différent du premier intervalle.

En particulier, il est prévu des moyens formant butée disposés de manière à limiter plus l'amplitude de rotation de la manette dans l'une des sens de rotation par rapport à l'autre sens.

Suivant un mode de réalisation, les moyens de commande comportent deux boutons poussoirs, chaque bouton poussoir ayant une course entraînant une temporisation respective, les deux temporisations étant différentes.

Suivant encore un autre mode de réalisation, les moyens de commande comporte un point dur, l'agencement étant tel que l'actionnement des moyens de commande jusqu'au point dur entraînant une première temporisation, et l'actionnement des moyens de commande au-delà du point dur entraînant une deuxième temporisation, différente de la première temporisation, notamment supérieure à la première temporisation, les moyens de commande pouvant notamment comporter une manette ou un bouton poussoir.

La présente invention se rapporte également à un procédé pour délivrer de l'eau suivant la revendication 10.

La présente invention se rapporte également à un procédé pour se laver les mains suivant la revendication 11.

A titre d'exemple, on décrit maintenant un mode de réalisation préféré de l'invention en se reportant aux dessins dans lesquels :
la figure 1 est une vue en perspective d'un robinet suivant l'invention suivant une version mitigeur monté sur la plage d'un lavabo ;
- la figure 2 est une vue d'un dispositif formant robinet en version simple monté également sur une plage d'un lavabo ;
- la figure 3 est une vue en perspective de la partie supérieure des robinets des figures 1 et 2 suivant une vue éclatée ;
- la figure 4 est une vue en perspective éclatée des différents éléments du robinet des figures 1 et 2 en partie supérieure ;
- la figure 5 est une vue en perspective partiellement éclatée de la cartouche temporisée disposée en partie inférieure dans le corps du robinet ;
- les figures 6A, 6B et 6C sont des vues en perspective du capot des dispositifs des figures 1 et 2, suivant des agencements différents, les agencements se différenciant par le positionnement de butées A et B, ces positionnements faisant que les durées de temporisation varient d'une figures à l'autre;
- la figure 7 est une vue en coupe longitudinale du robinet des figures 1 et 2 ;
- la figure 8 est une vue en coupe suivant la ligne A-A de la figure 3 ;
- la figure 9 est une vue en perspective partiellement éclatée de la cartouche temporisée formant la vanne des modes de réalisation des figures 1 ou 2 ;
- les figures 10a, 10b et 10c représentent les différentes positions de la manette, à savoir une position de repos à la figure 10a, une position d'actionnement dans une direction qui s'éloigne de l'utilisateur à la figure 10b et une position d'actionnement vers l'utilisateur à la figure 10c.

L'agencement dans un lavabo, de même que dans une douche, est tel que l'orifice de sortie se trouve au dessus d'une zone de réception et d'évacuation de l'eau, par exemple un bassin ou une cuvette, en étant à distance suffisante de cette zone de réception d'eau pour permettre à l'utilisateur d'y positionner une partie de son corps, par exemple les mains dans le cas du lavabo, ou, dans le cas de la douche, la quasi totalité de son corps, pour que l'eau puisse venir mouiller la partie du corps ou le corps interposé.

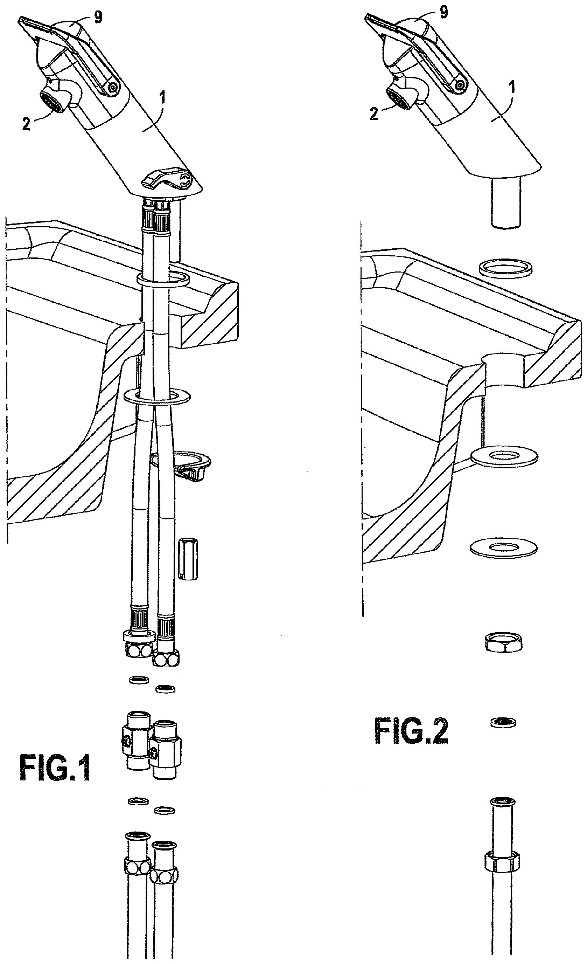

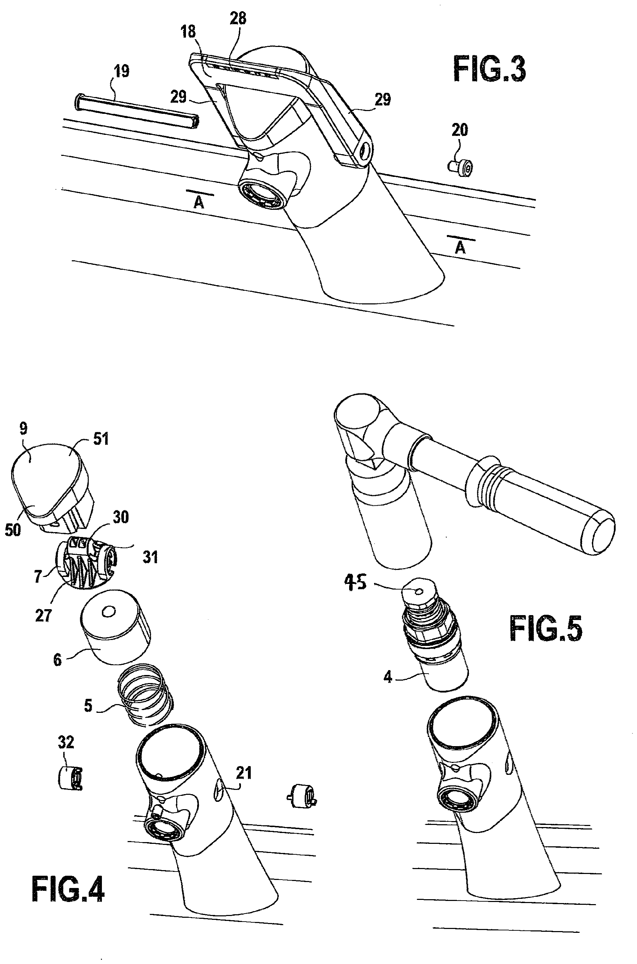

Aux dessins, il est représenté deux versions d'un robinet temporisé suivant l'invention montées sur la plaque d'un lavabo. La figure 1 représente une version à mitigeur comportant deux conduits passant par l'orifice d'entrée, à savoir un conduit d'eau chaude et un conduit d'eau froide, et un orifice de sortie d'eau mitigée et la figure 2 représente une version plus simple dans laquelle un seul conduit pénètre par l'orifice d'entrée pour une sortie d'eau par l'orifice de sortie. Le corps du robinet de ces deux modes de réalisation est identique et les figures 3 à 8 suivantes s'appliquent de la même manière à ces deux versions.

Le robinet est constitué d'un corps 1 principal sensiblement de forme cylindrique circulaire oblongue destiné à être monté sur la plage du lavabo (voir les figures 1 et 2). Le montage et la fixation sur le lavabo des robinets des figures 1 et 2 s'effectuent de manière classique et connue par l'intermédiaire de vis, écrous et rondelles et ne sont pas décrits plus en détail dans la présente demande.

Le corps 1 du robinet est coiffé sur sa partie supérieure d'un capot 9 supérieur qui vient fermer l'extrémité supérieure du corps 1 de robinet. En outre, le corps 1 comporte un orifice 2 de sortie d'eau qui débouche de la surface latérale du corps 1, de préférence en partie haute, et un orifice 3 d'entrée d'eau débouchant à l'opposé du capot 9, en face de la plage du lavabo.

Suivant le mode de réalisation des figures 1 ou 2, pénètrent dans le corps 1 par l'intermédiaire de l'orifice 3 d'entrée dans le corps 1 un ou deux conduits. Dans le cas de deux conduits (figure 1), il y a un conduit d'eau chaude et un conduit d'eau froide. Dans ce cas, il est prévu à l'intérieur du corps 1 du robinet un mitigeur destiné à assurer le mélange des eaux chaude et froide avant leur sortie par l'orifice 2.

A l'intérieur du corps 1 du robinet sont disposés en succession du bas vers le haut (c'est à dire de l'orifice 3 d'entrée vers le capot 9) une cartouche 4 temporisée (représenté à la figure 5), un ressort 5 hélicoïdal, un bouton poussoir 6, une rotule 7 et le capot 9.

La cartouche 4 temporisée est une cartouche classique qui comporte une chambre 41 de temporisation dans laquelle peut se déplacer un obturateur 42 sous l'action d'un piston 43 ayant une tête 44 sur laquelle vient agir le bouton poussoir 6.

Ainsi, lorsqu'il est exercé une pression sur le bouton poussoir 6, celui appuie sur la tête 44 du piston 43 pour pousser l'obturateur 42 hors de son siège 48 et à l'intérieur de la chambre 41 de temporisation, chassant ainsi l'eau qui s'y trouve par les découpes 49 périphériques de l'obturateur 42, le siège 48 et les fenêtres 46 ouvertes par la sortie de l'obturateur hors du siège. Les fenêtres 46 ayant été ouvertes par la sortie de l'obturateur 42 de son siège 48, cela a aussi pour effet d'ouvrir la communication pour l'eau entre l'orifice 3 d'entrée et l'orifice 2 de sortie, pour ainsi assurer une délivrance d'eau à l'utilisateur.

Un petite partie du débit d'eau principal passe par un trou 45 calibré traversant le piston et l'obturateur pour ainsi venir remplir la chambre de temporisation. Le remplissage de la chambre repousse petit à petit l'obturateur 42 dans son siège 48 et vient refermer les fenêtres 46 pour ainsi couper la communication pour l'eau entre l'orifice 3 d'entrée et l'orifice 2 de sortie. On choisit la dimension du trou calibré pour déterminer le temps que met l'obturateur à revenir dans son siège pour ainsi réaliser la temporisation.

Le capot 9 comporte une partie 10 supérieure de tête sensiblement circulaire et une partie 11 inférieure tubulaire de diamètre plus petit de manière à pouvoir pénétrer à l'intérieur du corps 1 tandis que la partie 10 de tête vient buter sur le bord supérieur du corps 1 pour y être fixée, par exemple par vissage ou par encliquetage.

Une manette 18 est montée pivotante par rapport au corps 1 du robinet par rapport à un axe 19 de section carrée s'étendant de part et d'autre du corps 1 de robinet dans une direction horizontale sensiblement perpendiculaire à l'axe de délivrance de l'eau par l'orifice de sortie. La manette 18 est en forme de U en ayant une barrette 28 transversale horizontale parallèle à l'axe 19, qui à la figure 3 s'étend au-dessus de la surface supérieure du capot 9 du corps 1 de robinet, et deux branches 29 latérales longitudinales gauche et droite, qui s'étendent le long de la surface latérale du corps 1 de robinet à l'extérieur de ce dernier. L'axe 19 de section carrée est fixé solidaire en rotation aux extrémités inférieures des deux branches latérales de la manette dans des paliers 32 respectifs formés dans les branches 29, une vis 20 assurant la fixation de l'axe 19 et des branches latérales de la manette 18.

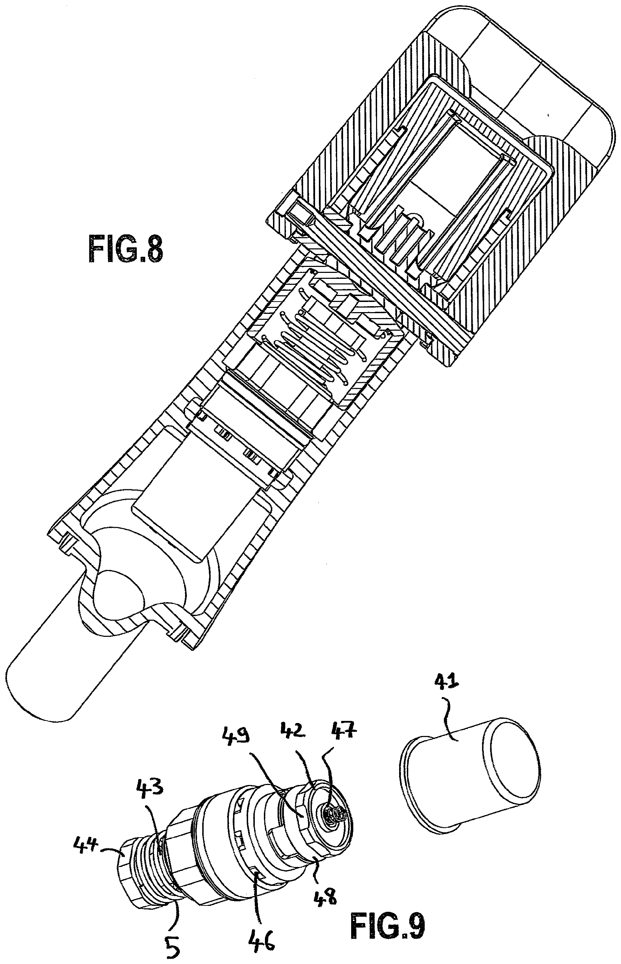

En position de repos ou neutre des moyens de commande, les branches s'étendent sensiblement parallèlement à l'axe longitudinal du corps de robinet et la barrette transversale s'étend au dessus du sommet du corps de robinet. La distance entre la barrette transversale et la surface de sommet du capot 9 est sensiblement nulle, mais cependant juste suffisante pour permettre, lors de la rotation de la manette dans un sens et dans l'autre, à la barrette transversale de passer au delà de la périphérie de la surface supérieure du capot, pour atteindre les positions extrêmes représentées aux figures 9b et 9c. la surface supérieure du capot 9 comporte une zone 50 avant inclinée vers le bas et une zone 51 arrière inclinée vers le bas, pour faciliter la rotation de la barrette transversale sans qu'elle ne tape contre ladite surface supérieure tout en conservant une distance entre la barrette et la surface supérieure du capot 9 aussi petite que possible.

L'axe 19 est également rendu solidaire en rotation de la rotule 7. La rotule 7 comporte une partie inférieure formant plaque de base 27, qui vient presser contre la face supérieure de l'élément 6 cylindrique formant bouton poussoir intérieur destiné à presser la tige de l'obturateur de la cartouche 4 temporisée. La rotule 7 comporte à la surface supérieure de la plaque 27 de base une partie 31 tubulaire de section carrée complémentaire de la section carrée de l'axe 19 et dans laquelle passe l'axe 19 sensiblement à complémentarité de forme pour assurer la solidarité en rotation de l'axe 19 et de la rotule 7. Au dessus de la partie 31 tubulaire de réception de l'axe 19, fait saillie une partie 30 formant came, de forme sensiblement parallélépipédique rectangle.

La rotule 7, l'axe 19 et la manette 18 sont ainsi solidaires en rotation, tandis que l'axe 19 peut pivoter par rapport au corps 1 dans les paliers 32 montés dans les trous 21 formés dans la surface latérales du corps 1. Ainsi, lorsque l'utilisateur presse vers lui, c'est-à-dire vers la gauche à la figure 3, la manette 18 extérieure, notamment sa barrette 28 transversale de base, il fait également pivoter vers lui à l'intérieur du corps 1 la came 30 et la plaque 27. La plaque 27 applique alors une pression vers le bas sur le bouton poussoir 6. Cette pression sur le bouton poussoir 6 a pour conséquence le déplacement vers le bas d'un plongeur de la cartouche 4 temporisée, ce qui va pousser l'obturateur de la vanne hors de son siège d'une certaine distance. La vanne est alors ouverte, et dès relâchement de la manette, l'eau peut passer par la vanne entre l'orifice d'entrée et l'orifice de sortie d'eau. Dans le même temps, une partie du débit d'eau, par une ouverture calibrée en conséquence, pénètre dans la chambre de temporisation de la cartouche temporisée et vient, au fur à mesure du remplissage de la chambre, repousser l'obturateur dans son siège, le calibrage étant réalisé pour que ce retour de l'obturateur par la poussée de l'eau remplissant la chambre de temporisation prenne un temps déterminé à l'avance, dit intervalle de temps de temporisation, par exemple 15 secondes.

Le temps que met l'obturateur à revenir dans son siège est fonction de la distance de sa course initiale s'éloignant du siège. Plus le bouton 6 poussoir a été appuyé fortement, plus la durée est grande, et ce jusqu'à une valeur maximale correspondant au moment où la came 31 vient buter contre une rainure 40 avant ou 41 arrière formée dans la paroi intérieure de l'embout 11 et ayant une complémentarité de forme avec la came 30.

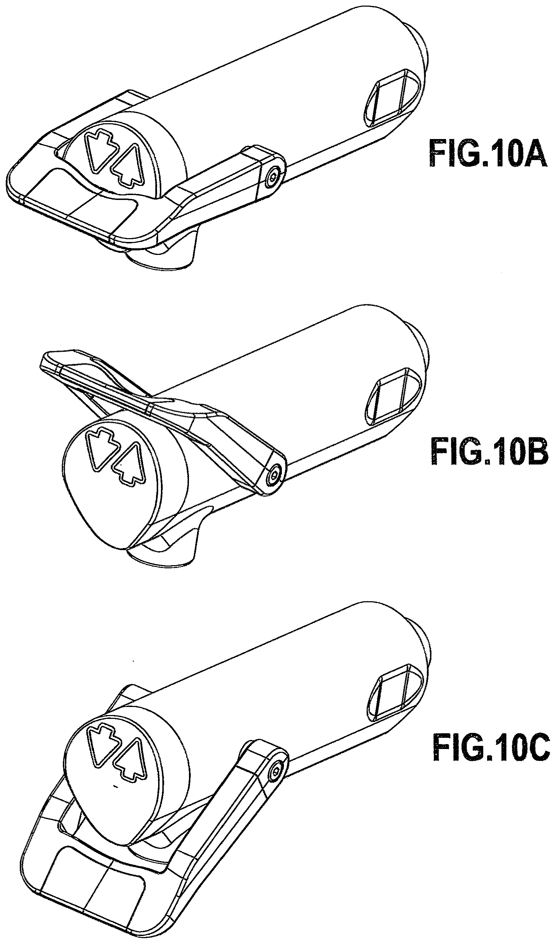

Une fois que l'utilisateur a relâché la manette, le ressort 5 renvoie le bouton 6 vers le haut et la manette est de nouveau dans la position représentée à la figure 3 ou à la figure 10A.

La temporisation est donc fonction de la course angulaire de poussée de la plaque 27 contre le bouton poussoir 6 lors de l'actionnement de la manette. Plus le bouton poussoir 6 a été enfoncé loin, plus la chambre de temporisation a été vidée et plus longue est la temporisation pendant laquelle l'eau va s'écouler avant que ne soit à nouveau remplie la chambre de temporisation de la cartouche 4 de temporisation.

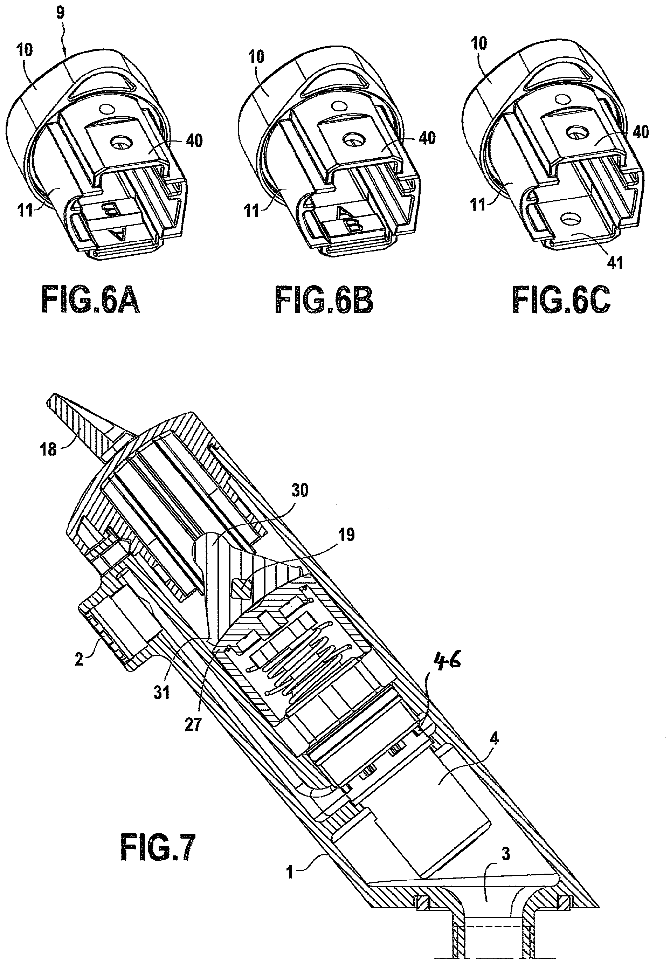

L'agencement est réalisé de sorte que la course de la came 30 lors de la rotation de la manette n'est pas limitée de la même manière suivant que l'on actionne la manette 18 vers le bas (figure 10C) ou vers le haut (figure 10B) à la figure 3, c'est à dire notamment suivant que l'utilisateur utilisant le lavabo rapproche la manette vers lui ou l'éloigne. Pour ce faire, on insère à l'intérieur des rainures 40 et 41 formées dans l'embout et dans lesquelles est destinée à venir s'introduire la came 30 lors de la rotation de la rotule 7 des cales A et B représentées aux figures 6A et 6B, qui ont pour effet de bloquer à des moments différents de sa course la came 30. Ainsi, comme représenté à la figure 6A, lorsque les deux cales A et B sont fixées comme indiqué à la figure 6A, on obtient une temporisation de 7 secondes. Si on veut obtenir une temporisation de 11 secondes, on fixe les cales comme représenté à la figure 6B. A l'inverse, comme représenté à la figure 6C, si on ne dispose aucune cale dans les rainures, on obtient la temporisation précédemment mentionnée de quinze secondes, identique pour les deux sens d'actionnement de la manette.

Dans le mode de réalisation de la figure 6A, on a, lorsque l'on tire la manette vers soi, une temporisation de sept secondes et une temporisation de quinze secondes, lorsque l'on repousse la manette dans le sens opposé. A la figure 6B, on a une temporisation de 11 secondes, lorsque l'on tire la manette vers soi, et une temporisation de 15 secondes lorsqu'on la repousse dans le sens opposé, tandis qu'à la figure 6C, on a une temporisation symétrique de 15 secondes dans les deux sens. On peut également prévoir un mode de réalisation dans lequel on prévoit vers soi une temporisation de sept secondes avec le positionnement des cales comme représenté à la figure 6A, dans la rainure 41, tandis que les cales A et B fixées dans la rainure 40 sont disposées, comme représenté à la figure 6B, ce qui donne alors une temporisation de 7 et 11 secondes respectivement suivant la rotation choisie pour la manette 18.

Ainsi, pour se laver les mains par exemple, un utilisateur agit de la manière suivante. Il actionne la manette 18 vers lui pour avoir une temporisation de sept secondes pendant laquelle il a le temps de se mouiller les mains. Une fois la manette revenue et l'eau ayant cessé de couler, il peut, par exemple après s'être enduit les mains de savon, de nouveau actionner la manette s'il le souhaite, vers soi de nouveau, pour une temporisation de 7 secondes, mais plus préférablement dans l'autre sens pour une temporisation supérieure qui peut être par exemple de 11 ou de 15 secondes, pour lui permettre de se rincer les mains après s'être enduit de savon. Bien évidemment, on peut également inverser les temporisations (le court débit lorsque l'on éloigne la manette et le long débit lorsqu'on rapproche la manette). On a ainsi le choix à tout moment entre deux quantités d'écoulement d'eau et ce dès la fin d'un écoulement d'une quantité ou de l'autre. Il peut ainsi adapter la quantité d'eau délivrée à ses besoins, ce qui permet d'assurer une certaine économie d'eau très utile, notamment pour des robinets pour collectivités, application classique pour des robinets mitigeur temporisés de ce genre. En particulier, dans l'art antérieur, il est classique que lors de la première étape de mouillage l'utilisateur n'utilise pas la totalité de l'eau qu lui est délivrée. Suivant l'invention, on diminue ainsi la quantité d'eau qui va s'écouler ainsi de manière inutile.

La description ci-dessus est réalisée sur la base d'un mode de réalisation dans lequel la manette est déplacée vers soi ou à l'opposé. On peut également prévoir des déplacements vers la droite et vers la gauche ou vers le bas ou vers le haut, ou tous autres déplacements analogues.

Aux dessins, il a été représenté des modes de réalisation de robinets de lavabo sur vasque. Bien évidemment, l'invention peut s'appliquer également à des robinets de lavabo en version murale. On peut également l'appliquer à des installations de douches.

## Revendications

1. Assemblage comportant un dispositif formant robinet temporisé et une zone de réception et d'évacuation d'eau, par exemple un bassin, une vasque, une cuvette ou analogue, le dispositif formant robinet temporisé étant constitué d'un corps (1) de robinet, comportant un orifice (3) d'arrivée d'eau, notamment en partie basse, un orifice (2) de sortie d'eau, notamment en partie haute, à distance suffisante de la zone de réception d'eau pour permettre à l'utilisateur d'y positionner au moins une partie de son corps, par exemple les mains dans le cas d'un lavabo, ou la totalité ou quasi totalité de son corps dans le cas d'une douche, pour que l'eau puisse venir mouiller ladite au moins une partie du corps, des moyens formant circuit d'eau entre les orifices d'arrivée et de sortie, et des moyens (4) formant vanne temporisée commandée par des moyens (18) de commande d'ouverture, l'actionnement par un utilisateur des moyens de commande d'ouverture entraînant la fourniture d'eau pendant un intervalle de temps fini, l'agencement étant tel qu'en fonctionnement, les moyens de commande d'ouverture peuvent être actionnés par l'utilisateur suivant au moins deux modes d'actionnement, un premier mode d'actionnement dans lequel de l'eau est fournie pendant un premier intervalle de temporisation non nul et au moins un deuxième mode d'actionnement dans lequel de l'eau est fournie pendant une deuxième intervalle de temporisation non nul, différent du premier intervalle de temporisation, les moyens formant vanne temporisée comportant une chambre (41) de temporisation, un siège (48) et un obturateur (42), l'agencement étant tel que dans le premier mode d'actionnement les moyens de commande poussent l'obturateur hors du siège dans la chambre de temporisation suivant une première course et dans le deuxième mode d'actionnement les moyens de commande poussent l'obturateur hors du siège dans la chambre de temporisation suivant une deuxième course, différente et indépendante de la première course, notamment qui s'étend dans une direction différente, notamment opposée, de sorte que la durée nécessaire pour le remplissage de nouveau de la chambre de temporisation est moindre dans l'un des modes que dans l'autre, l'eau qui remplit la chambre de temporisation repoussant l'obturateur dans son siège plus rapidement dans le mode d'actionnement correspondant à la plus petite des deux première et deuxième course, **caractérisé en ce que** la vanne temporisée est disposée dans le circuit d'eau, le débit d'eau principal entre l'orifice (3) d'arrivée d'eau et l'orifice (2) de sortie d'eau passant par le siège (48) de l'obturateur (42) des moyens formant vanne temporisée.

2. Assemblage suivant la revendication 1, **caractérisé en ce que** la deuxième course s'étend dans une direction différente de celle de la première course.

3. Assemblage suivant la revendication 2, **caractérisé en ce que** les première et deuxième courses s'étendent dans des directions opposées.

4. Assemblage suivant l'une des revendications 1 à 3, **caractérisé en ce que** les moyens de commande sont constitués d'une manette montée rotative par rapport à un axe, l'agencement étant tel que la rotation de la manette dans un sens entraînant une première temporisation avec un premier intervalle de temps de temporisation et la rotation dans le sens inverse entraînant une deuxième temporisation avec un deuxième intervalle de temps de temporisation, différent du premier intervalle.

5. Assemblage suivant la revendication 4, **caractérisé en ce que** il est prévu des moyens formant butée disposés de manière à limiter plus l'amplitude de rotation de la manette dans l'une des sens de rotation par rapport à l'autre sens.

6. Assemblage suivant l'une des revendications 1 à 5, **caractérisé en ce que** les moyens de commande comportent un point dur, l'agencement étant tel que l'actionnement des moyens de commande jusqu'au point dur entraînant une première temporisation, et l'actionnement des moyens de commande au-delà du point dur entraînant une deuxième temporisation, différente de la première temporisation, notamment supérieure à la première temporisation.

7. Assemblage suivant la revendication 6, **caractérisé en ce que** les moyens de commande comportent une manette.

8. Assemblage suivant la revendication 6, **caractérisé en ce que** les moyens de commande comportent un bouton poussoir.

9. Assemblage suivant l'une des revendications 1 à 3, **caractérisé en ce que** les moyens de commande comportent deux boutons poussoirs, chaque bouton poussoir ayant une course entraînant une temporisation respective, les deux temporisations étant différentes.

10. Procédé pour délivrer de l'eau par un robinet temporisé dans un assemblage formant lavabo ou douche, ledit assemblage suivant l'une des revendications précédentes, le procédé comportant les étapes qui consistent à actionner les moyens de commande du robinet pour délivrer de l'eau pendant un premier intervalle de temporisation non nul, puis à actionner les moyens de commande du robinet pour délivrer de l'eau pendant un deuxième intervalle de temporisation différent du premier intervalle.

11. Procédé pour se laver les mains, qui comporte les étapes dans lesquels :
- on actionne les moyens de commande d'un assemblage comportant un dispositif formant robinet temporisé suivant la revendication 1 suivant un premier mode d'actionnement pour ainsi délivrer un petit volume d'eau avec lequel on se mouille la ou les mains,
- on enduit les mains de savon ou analogue,
- on se frotte les mains,
- on actionne les moyens de commande du robinet suivant un deuxième mode d'actionnement pour ainsi délivrer un grand volume d'eau avec lequel on se rince la ou les mains.

## Patentansprüche

1. Anordnung, umfassend eine Vorrichtung, die eine Selbstschlussarmatur bildet, und einen Wasseraufnahme- und Wasserabführbereich, beispielsweise ein Becken, eine Wanne, eine WC-Schüssel oder Ähnliches, wobei die eine Selbstschlussarmatur bildende Vorrichtung aus einem Armaturenkörper (1) besteht, der eine Wasserzulauföffnung (2), insbesondere im unteren Teil, eine Wasseraustrittsöffnung (3), insbesondere im oberen Teil, in ausreichendem Abstand vom Wasseraufnahmebereich, um dem Benutzer zu ermöglichen, zumindest einen Teil seines Körpers dort zu positionieren, beispielsweise die Hände im Fall eines Waschbeckens oder den gesamten oder fast den gesamten Körper im Fall einer Dusche, damit das Wasser den mindestens einen Teil des Körpers nass machen kann, Mittel, die einen Wasserkreislauf zwischen der Zulauf- und der Austrittsöffnung bilden, und Mittel, die ein Selbstschlussventil bilden (4), das durch Öffnungssteuerungsmittel (18) gesteuert wird, umfasst, wobei die Betätigung der Öffnungssteuerungsmittel durch einen Benutzer die Abgabe von Wasser während einer endlichen Zeitdauer bewirkt, wobei die Anordnung dergestalt ist, dass die Öffnungssteuerungsmittel vom Benutzer während des Betriebs gemäß mindestens zwei Betätigungsarten betätigt werden können, und zwar einer ersten Betätigungsart, bei der Wasser während einer ersten Laufzeit ungleich Null abgegeben wird, und mindestens einer zweiten Betätigungsart, bei der Wasser während einer zweiten Laufzeit ungleich Null abgegeben wird, die von der ersten Laufzeit verschieden ist, wobei die ein Selbstschlussventil bildenden Mittel eine Kammer (41) zur Laufzeiteinstellung, einen Sitz (48) und eine Absperreinrichtung (42) umfassen, wobei die Anordnung dergestalt ist, dass die Steuerungsmittel die Absperreinrichtung bei der ersten Betätigungsart aus dem Sitz heraus über einen ersten Hub in die Kammer zur Laufzeiteinstellung drücken und die Steuerungsmittel die Absperreinrichtung bei der zweiten Betätigungsart aus dem Sitz heraus über einen zweiten Hub in die Kammer zur Laufzeiteinstellung drücken, der vom ersten verschieden und unabhängig ist, der sich insbesondere in eine andere, insbesondere entgegengesetzte Richtung erstreckt, so dass die erforderliche Dauer zum erneuten Füllen der Kammer zur Laufzeiteinstellung in der einen der Arten kürzer als in der anderen ist, wobei das Wasser, das die Kammer zur Laufzeiteinstellung füllt, die Absperreinrichtung in der Betätigungsart, die dem kleineren des ersten und des zweiten Hubs entspricht, schneller in seinen Sitz zurückdrückt, **dadurch gekennzeichnet, dass** das Selbstschlussventil im Wasserkreislauf angeordnet ist, wobei der Hauptwasserdurchfluss zwischen der Wasserzulauföffnung (3) und der Wasseraustrittsöffnung (2) durch den Sitz (48) der Absperreinrichtung (42) der das Selbstschlussventil bildenden Mittel verläuft.

2. Anordnung nach Anspruch 1, **dadurch gekennzeichnet, dass** sich der zweite Hub in eine andere Richtung als der erste Hub erstreckt.

3. Anordnung nach Anspruch 2, **dadurch gekennzeichnet, dass** sich der erste und der zweite Hub in entgegengesetzte Richtungen erstrecken.

4. Anordnung nach einem der Ansprüche 1 bis 3, **dadurch gekennzeichnet, dass** die Steuerungsmittel aus einem Griff bestehen, der in Bezug auf eine Achse drehbar gelagert ist, wobei die Anordnung dergestalt ist, dass das Drehen des Griffs in eine Richtung eine erste Laufzeit mit einer ersten Laufzeitdauer bewirkt und das Drehen in die Gegenrichtung eine zweite Laufzeit mit einer zweiten Laufzeitdauer bewirkt, die von der ersten Dauer verschieden ist.

5. Anordnung nach Anspruch 4, **dadurch gekennzeichnet, dass** einen Anschlag bildende Mittel vorgesehen sind, die derart angeordnet sind, dass sie die Drehamplitude des Griffs in die eine Drehrichtung stärker begrenzen als in die andere Richtung.

6. Anordnung nach einem der Ansprüche 1 bis 5, **dadurch gekennzeichnet, dass** die Steuerungsmittel einen Druckpunkt umfassen, wobei die Anordnung dergestalt ist, dass die Betätigung der Steuerungsmittel bis zum Druckpunkt eine erste Laufzeit bewirkt und die Betätigung der Steuerungsmittel über den Druckpunkt hinaus eine zweite Laufzeit bewirkt, die von der ersten Laufzeit verschieden ist, insbesondere länger als die erste Laufzeit ist.

7. Anordnung nach Anspruch 6, **dadurch gekennzeichnet, dass** die Steuerungsmittel einen Griff umfassen.

8. Anordnung nach Anspruch 6, **dadurch gekennzeichnet, dass** die Steuerungsmittel eine Drucktaste umfassen.

9. Anordnung nach einem der Ansprüche 1 bis 3, **dadurch gekennzeichnet, dass** die Steuerungsmittel zwei Drucktasten umfassen, wobei jede Drucktaste einen Hub hat, der eine jeweilige Laufzeit bewirkt, wobei die beiden Laufzeiten verschieden sind.

10. Verfahren zum Abgeben von Wasser durch eine Selbstschlussarmatur in einer ein Waschbecken oder eine Dusche bildenden Anordnung nach einem der vorhergehenden Ansprüche, wobei das Verfahren die Schritte umfasst, die darin bestehen, die Steuerungsmittel der Armatur zu betätigen, um Wasser während einer ersten Laufzeitdauer ungleich Null abzugeben, dann die Steuerungsmittel der Armatur zu betätigen, um Wasser während einer zweiten Laufzeitdauer abzugeben, die von der ersten Dauer verschieden ist.

11. Verfahren, um sich die Hände zu waschen, das die Schritte umfasst, bei denen:
- man die Steuerungsmittel einer Anordnung, die eine Vorrichtung, die eine Selbstschlussarmatur bildet, nach Anspruch 1 umfasst, gemäß einer ersten Betätigungsart betätigt, um so eine geringe Wassermenge abzugeben, mit der man sich die Hand oder die Hände nass macht,
- man die Hände mit Seife oder Ähnlichem einreibt,
- man sich die Hände reibt,
- man die Steuerungsmittel der Armatur gemäß einer zweiten Betätigungsart betätigt, um so eine große Wassermenge abzugeben, mit der man sich die Hand oder die Hände abspült.

## Claims

1. Assembly comprising a device forming a timed-flow tap and a water receipt and discharge area, such as a basin, sink, bowl or similar, the device forming a timed-flow tap consisting of a tap body (1), comprising a water inlet orifice (3), particularly in the lower part, a water outlet orifice (2), particularly in the upper part, sufficiently far away from the water receipt area to enable the user to position at least part of their body in said area, for example their hands in the case of a washbasin, or all, or almost all, of their body in the case of a shower, so that the water can wet the said at least one part of the body, means forming a water circuit between the inlet and outlet orifices, and means (4) forming a timed valve controlled by opening control means (18), actuation of said opening control means by a user causing water to be supplied for a finite interval of time, the arrangement being such that, in operation, the opening control means can be actuated by the user by at least two actuation modes, a first actuation mode in which water is supplied for a first timed interval which is not zero and at least one second actuation mode in which the water is supplied for a second timed interval which is not zero, different from the first timed interval, the means forming a timed valve comprising a time delay chamber (41), a seat (48) and a closure member (42), the arrangement being such that, in the first actuation mode, the control means push the closure member out of the seat in the time delay chamber along a first stroke and in the second actuation mode the control means push the closure member out of the seat in the time delay chamber along a second stroke which is different and independent from the first stroke, particularly in that it extends in a different direction, particularly in the opposite direction, such that the time required for the time delay chamber to refill is less in one of these modes than in the other, the water filling the time delay chamber pushing the closure member back into its seat more quickly in the actuation mode corresponding to the smaller of the two first and second strokes, **characterised in that** the timed valve is located in the water circuit, the main water flow between the water inlet orifice (3) and the water outlet orifice (2) passing through the seat (48) of the closure member (42) for the means forming a timed valve.

2. Assembly according to claim 1, **characterised in that** the second stroke extends in a different direction to that of the first stroke.

3. Assembly according to claim 2, **characterised in that** the first and second strokes extend in opposite directions.

4. Assembly according to any one of claims 1 to 3, **characterised in that** the control means consist of a lever fitted such that it rotates in relation to an axis, the arrangement being such that rotating the lever in one direction leads to a first time delay with a first timing interval and rotating in the opposite direction leads to a second time delay with a second timing interval, which is different from the first interval.

5. Assembly according to claim 4, **characterised in that** means are provided to form a stop arranged such as to limit the extent of rotation of the lever more in one - direction than in the other.

6. Assembly according to any one of claims 1 to 5, **characterised in that** the control means comprise a hard spot, the arrangement being such that actuating the control means to the hard spot gives rise to a first time delay and actuating the control means beyond the hard spot gives rise to a second time delay, different from the first time delay, and in particular longer than the first time delay.

7. Assembly according to claim 6, **characterised in that** the control means comprise a lever.

8. Assembly according to claim 6, **characterised in that** the control means comprise a pushbutton.

9. Assembly according to any one of claims 1 to 3, **characterised in that** the control means comprise two pushbuttons, each pushbutton having a stroke leading to a respective time delay, both time delays being different.

10. Method to supply water by a timed-flow tap in an assembly forming a washbasin or shower, said assembly being in accordance with any one of the preceding claims, the method comprising steps that entail actuating control means for the tap to supply water during a first time interval, which is not zero, and then actuating the tap control means to supply water for a second time interval which is different from the first interval.

11. Method for washing hands, which entails steps in which:
- the control means for an assembly comprising a device forming a timed tap according to claim 1 are actuated by a first actuating mode in order to thereby supply a small volume of water with which to wet the hand or hands,
- soap or a similar product is then applied to the hands,
- the hands are rubbed together,
- the control means for the tap are actuated by a second actuation mode to thereby supply a large volume of water to rinse the hand or hands.
